# EUROPÄISCHE PATENTSCHRIFT

(11) **EP 1 854 377 B1**
(45) Veröffentlichungstag und Bekanntmachung des Hinweises auf die Patenterteilung: **14.09.2011**
(21) Anmeldenummer: 07004790.7
(22) Anmeldetag: 08.03.2007
(51) Int. Cl.: A47B 91/00, B65G 1/00, E04H 12/22

(54) **Fussplatte**
Foot plate
Semelle

(30) Priorität: 10.05.2006 DE 202006007485 U
(43) Veröffentlichungstag der Anmeldung: 14.11.2007
(73) Patentinhaber: BITO-Lagertechnik Bittmann GmbH, 55590 Meisenheim (DE)
(72) Erfinder: Lörsch, Andreas, 55621 Hundsbach (DE)
(74) Vertreter: Richardt Patentanwälte

(56) Entgegenhaltungen:
- EP-A- 1 129 644
- DE-A1- 10 115 756
- GB-A- 2 120 703
- US-A- 5 012 938

## Beschreibung

Die Erfindung betrifft eine Stützenvorrichtung nach dem Oberbegriff des Patentanspruchs 1 sowie ein Regal nach dem Oberbegriff des Patentanspruchs 3

Zur Befestigung von Industrieregalen ist es bekannt, die vertikalen Stützen des Regals an einer Fußplatte zu befestigen, die ihrerseits mit dem Boden verschraubt ist. Die Stützen werden nur an ihrer Rückseite mit der Fußplatte verschraubt. Dies hat zur Folge, dass die Stützen im unteren Bereich eingedrückt werden können, wenn sie unzulässig groß belastet werden, beispielsweise bei einem unabsichtlichen Auftreffen der Gabel eines Gabelstaplers. Um diesen Nachteil zu verhindern, ist es bekannt, die Fußplatte vorne hoch zu kanten und mit der Vorderseite der Stütze zu verschrauben siehe, z.B., US-A-5 012 938. Bei einer anderen Lösung wird ein Winkel mit der Fußplatte und der Vorderwand der Stütze verschraubt.

Bei den genannten Lösungen ist der Materialeinsatz sehr hoch. Außerdem erhöht sich durch die Verschraubung mit der Vorderwand der Stütze der für die Installation eines Regals erforderliche Montageaufwand.

Der Erfindung liegt die Aufgabe zugrunde, mit konstruktiv einfachen Mitteln eine Stützenvorrichtung mit einer Fußplatte aus Metall und einer vertikalen Stütze mit hohlem Querschnitt zu schaffen, die ein Eindrücken der Vorderwand der Stütze bei unbeabsichtigter Belastung verhindert und die Montage der Stütze auf der Fußplatte erleichtert.

Diese Aufgabe wird durch eine Stützenvorrichtung mit den Merkmalen des Patentanspruchs 1 gelöst. Eine vorteilhafte Weiterbildung der erfindungsgemäßen Stützenvorrichtung ist Gegenstand des Patentanspruchs 2. Ein Regal mit wenigstens einer vertikalen Stütze, die auf einer Fußplatte befestigt ist, ist Gegenstand des Schutzanspruchs 3.

Die Fußplatte der erfindungsgemäßen Stützenvorrichtung ist mit wenig Aufwand und wenig Materialeinsatz herstellbar, da die Nasen, die ein Eindrücken der Vorderwand der vertikalen Stütze verhindern, lediglich durch Biegen aus dem Material der Fußplatte gebildet sind. Eine zusätzliche Verschraubung mit der Vorderwand der Stütze ist nicht erforderlich, so dass die Stütze mit wenig Montageaufwand auf der Fußplatte angebracht werden kann.

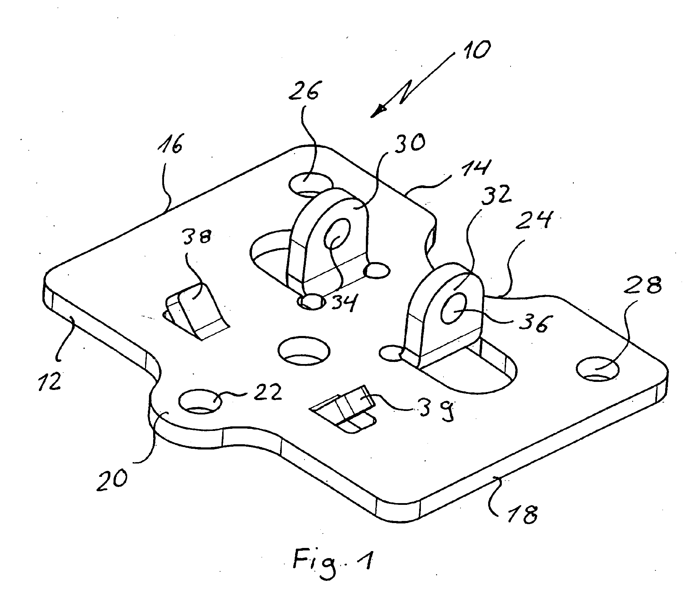

Ein Ausbildungsbeispiel der Erfindung wird nachstehend anhand der Zeichnungen näher erläutert. Es zeigt
- Fig. 1: eine perspektivische Ansicht einer Fußplatte,
- Fig. 2: eine perspektivische Ansicht der Befestigung einer Stütze auf der Fußplatte von Fig. 1,
- Fig. 3: eine Draufsicht auf die in Fig. 2 gezeigte Anordnung von Stütze und Fußplatte.

Die Fußplatte 10 ist insgesamt rechteckig ausgebildet und weist einen vorderen Rand 12, einen hinteren Rand 14 sowie zwei Seitenränder 16, 18 auf. An der Mitte des vorderen Rands 12 erstreckt sich ein Vorsprung 20 nach vorne, in dem eine Befestigungsöffnung 22 vorgesehen ist. In dem hinteren Rand ist eine Ausnehmung 24 ausgebildet, deren Kontur der Kontur des Vorsprungs 20 entspricht. In den hinteren Ecken der Fußplatte 10 sind außerdem Befestigungsöffnungen 26, 28 ausgebildet, die zusammen mit der Befestigungsöffnung 22 zur Befestigung der Fußplatte 10 an einem Boden dienen.

Im Abstand zur Ausnehmung 24 sind auf der Fußplatte 10 zwei sich senkrecht zu der Fußplatte 10 erstreckende Befestigungslaschen 30, 32 in gleichem Abstand zu der zwischen den Seitenrändern 16, 18 verlaufenden Mittellinie ML vorgesehen. Die Befestigungslaschen 30, 32 sind durch Biegen des Metalls der Fußplatte 10 um eine parallel zur Mittellinie ML verlaufende Biegelinie gebildet, wobei die Biegung zur Mittellinie ML hin nach oben durchgeführt wurde. In den Befestigungslaschen 30, 32 ist jeweils eine Durchgangsbohrung 34, 36 ausgebildet, wobei die Durchgangsbohrungen 34, 36 miteinander fluchten und ihre Mittelachse senkrecht zu der Mittellinie ML verläuft.

Zwischen den Befestigungslaschen 30, 32 und dem vorderen Rand 12 sind darüber hinaus zwei Nasen 38, 39 in gleichem Abstand zu dem vorderen Rand 12 und zur Mittellinie ML vorgesehen. Die Nasen 38, 39 haben eine insgesamt rechteckige Form und sind durch Biegen des Materials der Fußplatte 10 nach oben und nach innen um eine jeweils zur Mittellinie ML verlaufende Biegelinie gebildet. Die Nasen 38, 39 erstrecken sich jeweils in einem Winkel von ca. 45° zur Oberfläche der Fußplatte 10.

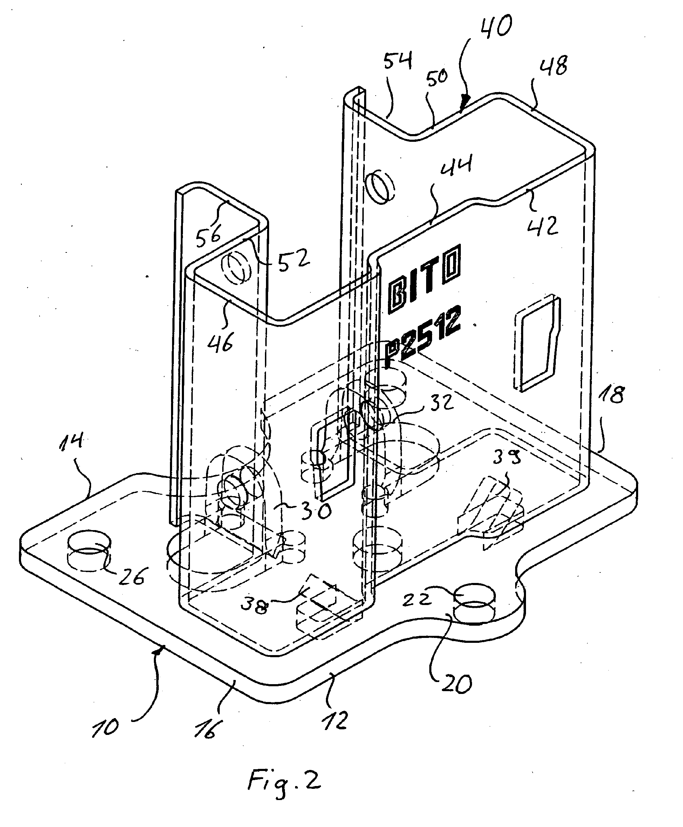

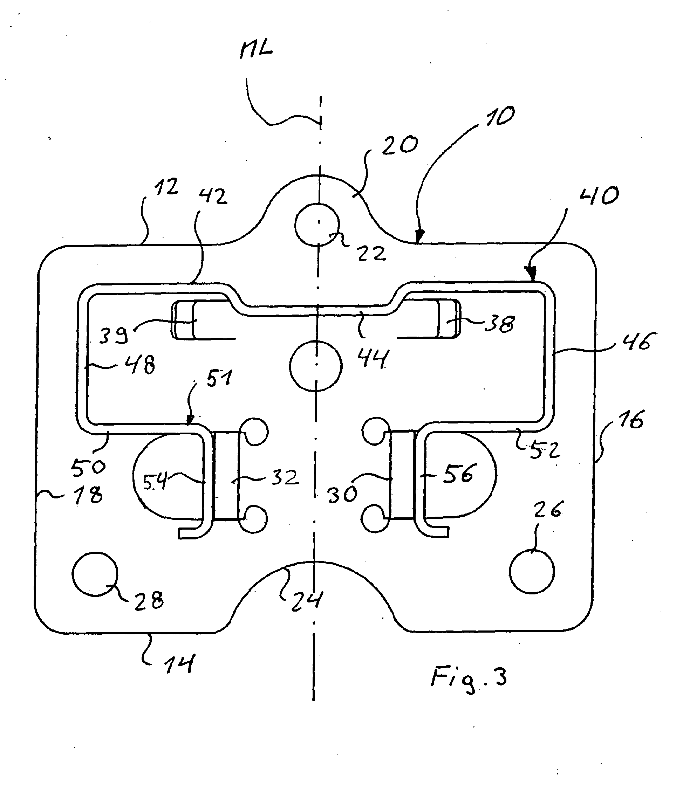

Wie es in den Figuren 2 und 3 gezeigt ist, ist auf die Fußplatte 10 eine Stütze 40 mit hohlen Querschnitt aufgesetzt. Die Stütze 40 weist eine insgesamt parallel zum vorderen Rand 12 verlaufende Vorderwand 42, eine hierzu insgesamt parallele Rückwand 51 sowie zwei parallel zueinander und senkrecht zu der Vorderwand 42 verlaufende Seitenwände 46, 48 auf. In der Vorderwand 42 ist mittig eine sich über die ganze vertikale Länge erstreckende Vertiefung 44 mit parallel zum vorderen Rand 12 verlaufenden Boden zwischen den Nasen 38, 39 ausgebildet. Die Rückwand 51 weist zwei sich von den Seitenrändern 46, 48 senkrecht nach innen erstreckende Schenkel 50, 52 auf, deren inneres Ende um 90° nach hinten gebogen ist, wodurch sich parallel zur Mittellinie ML erstreckende Befestigungsschenkel 54, 56 gebildet sind. Die Befestigungsschenkel 54, 56 liegen an der Außenseite jeweils einer Befestigungslasche 30, 32 an und weisen mit den Durchgangsbohrungen 34, 36 fluchtende Durchgangsöffnungen auf, so dass der jeweilige Befestigungsschenkel 54, 56 an der jeweiligen Befestigungslasche 32, 30 durch Verschraubung befestigt werden kann.

Die Nasen 38, 39 sind in geringem Abstand zur Vorderwand 40 angeordnet. Es ist auch möglich, die Nasen 38, 39 so anzuordnen, dass sie direkt an der Vorwand 42 anliegen.

Durch die Nasen 38, 39 wird verhindert, dass die Vorderwand 42 nach innen gedrückt werden kann, wenn von vorne eine Druckkraft ausgeübt wird.

## Patentansprüche

1. Stützenvorrichtung mit einer Fußplatte aus Metall und einer vertikalen Stütze (40) mit hohlen Querschnitt, wobei die Fußplatte (10) eine Befestigungseinrichtung (30, 32) für die Befestigung der Rückwand (51) der Stütze (40) aufweist, **dadurch gekennzeichnet, dass** wenigstens eine Nase (38, 39) aus dem Material der Fußplatte (10) so nach oben gebogen ist, dass sie nach Befestigung der Stütze (40) von hinten an die Vorderwand (42) der Stütze (40) angrenzt.

2. Stützenvorrichtung nach Anspruch 1, **dadurch gekennzeichnet, dass** die Befestigungseinrichtung von zwei im Abstand zu einander angeordneten Befestigungslaschen (30, 32) gebildet ist, die durch Biegen aus dem Material der Fußplatte (10) nach oben gebildet sind.

3. Regal mit wenigstens einer vertikalen Stütze (40) mit hohlem Querschnitt, die mittels einer Befestigungseinrichtung (30, 32) mit ihrer Rückwand (51) auf einer Fußplatte (10) aus Metall befestigt ist, **dadurch gekennzeichnet, dass** wenigstens eine Nase (38, 39) aus dem Material der Fußplatte (10) so nach oben gebogen ist, dass sie von hinten an die Vorderwand (42) der Stütze (40) angrenzt.

## Claims

1. Support arrangement having a metal foot panel and a vertical support (40) having a hollow cross section, wherein the foot panel (10) has a securing device (30, 32) for securing the rear wall (51) of the support (40), **characterized in that** at least one nose (38, 39) is bent upwards out of the material of the foot panel (10) such that it adjoins the front wall (42) of the support (40) from behind after the support (40) has been secured.

2. Support arrangement according to Claim 1, **characterized in that** the securing device is formed by two securing lugs (30, 32) that are arranged in a manner spaced apart from one another and are formed by being bent upwards out of the material of the foot panel (10).

3. Shelf having at least one vertical support (40) having a hollow cross section, said vertical support (40) being secured with its rear wall (51) on a metal foot panel (10) by means of a securing device (30, 32), **characterized in that** at least one nose (38, 39) is bent upwards out of the material of the foot panel (10) such that it adjoins the front wall (42) of the support (40) from behind.

## Revendications

1. Dispositif de support comprenant une semelle en métal et un montant vertical (40) de section transversale creuse, la semelle (10) présentant un dispositif de fixation (30, 32) pour la fixation de la paroi arrière (51) du montant (40), **caractérisé en ce qu'**au moins un nez (38, 39) en le matériau de la semelle (10) est cintré vers le haut de telle sorte qu'il soit adjacent par l'arrière à la paroi avant (42) du montant (40) après la fixation du montant (40).

2. Dispositif de support selon la revendication 1, **caractérisé en ce que** le dispositif de fixation est formé par deux pattes de fixation (30, 32) disposées à distance l'une de l'autre, qui sont formées par cintrage vers le haut à partir du matériau de la semelle (10).

3. Rayonnage comprenant au moins un montant vertical (40) de section transversale creuse, qui est fixé au moyen d'un dispositif de fixation (30, 32) avec sa paroi arrière (51) sur une semelle (10) en métal, **caractérisé en ce qu'**au moins un nez (38, 39) en le matériau de la semelle (10) est cintré vers le haut de telle sorte qu'il soit adjacent par l'arrière à la paroi avant (42) du montant (40).
